# EUROPÄISCHE PATENTSCHRIFT

(11) **EP 0 610 735 B1**
(45) Veröffentlichungstag und Bekanntmachung des Hinweises auf die Patenterteilung: **15.05.1996**
(21) Anmeldenummer: 94101228.8
(22) Anmeldetag: 28.01.1994
(51) Int. Cl.: B65G 69/00

(54) **Verformbare Dichtung des Spaltes zwischen dem Rand einer Gebäudeöffnung und dem Heck eines an diese herangefahrenen Fahrzeuges**
Flexible sealing of the gap between the edge of an aperture in a building the rear of a vehicle touching such a building
Joint d'étanchéité déformable pour la fente entre le bord d'une ouverture de bâtiment et l'arrière d'un véhicule s'en approchant

(30) Priorität: 09.02.1993 DE 4303682
(43) Veröffentlichungstag der Anmeldung: 17.08.1994
(73) Patentinhaber: Alten, Kurt, D-30974 Wennigsen (DE)
(72) Erfinder: Alten, Kurt, D-30974 Wennigsen (DE)
(74) Vertreter: Depmeyer, Lothar

(56) Entgegenhaltungen:
- EP-A- 0 477 675
- US-A- 4 574 543

## Beschreibung

Die Erfindung betrifft eine verformbare Dichtung des Spaltes zwischen dem Rand einer Gebäudeöffnung und dem Heck eines an diese herangefahrenen Fahrzeuges mit einer verformbaren, in Richtung auf das Gebäude nachgiebigen Schürze aus einem oben gelegenen Querteil, zu beiden Seiten der Gebäudeöffnung angeordneten senkrechten Streifen und einem unten gelegenen Querteil, wobei sich die beiden Querteile von einem zum anderen Streifen erstrecken, das obere Querteil an einer Traverse gardinenartig aufgehängt ist und am unteren Rand des unteren Querteils ein Tragkörper angreift.

Diese Schürze hat den Vorteil, dass nicht nur durch die beiden seitlichen Streifen an den Seitenrändern desFahrzeuges, sondern auch durch die beiden Querteile am oberen und unteren Rand des Fahrzeuges bzw. im Bereich des oberen und unteren Randes der Gebäudeöffnung eine Abdichtung herbeigeführt wird.Dabei muss das unten gelegene Querteil am unteren Rand von einem nachgiebigen Tragkörper gehalten sein, um eine Verformbarkeit des unteren Querteils sicherzustellen. Bei den bekannten Dichtungen wird dieser Tragkörper von einem waagerecht angeordneten, das Querteil vorne tragenden Block aus Schaumstoff gebildet, der hinten am Gebäude befestigt ist. Dadurch ergeben sich Schwierigkeiten, weil ein die elastische Verformbarkeit sicherstellender Schaumstoffblock weich sein muss, in diesem Falle aber nur über eine unzureichende Tragfähigkeit verfügt.

Aufgrund der Erfindung soll eine gute elastische Nachgiebigkeit in Richtung auf das Gebäude, eine ausreichende Verformbarkeit des unteren Querteils und weiterhin erreicht werden, dass das untere Querteil sicher in seiner senkrechten Stellung gehalten wird.

Zur Lösung dieser Aufgabe ist erfindungsgemäss der Tragkörper ein hochkant stehendes, mit dem unteren Querteil verbundenes, in Richtung auf das Gebäude biegsames Band, dessen Höhenerstreckung mehrfach größer ist als dessen Wandstärke. Der untere Rand des unteren Querteils ist mit einem hochkant angeordneten Band aus Federstahl oder einem Werkstoff mit ähnlichen Eigenschaften verbunden, wobei diese Verbindung durch Nieten, Kleben oder dgl. herbeigeführt werden kann und die Breite des Bandes bzw. seine Höhenerstreckung so gross sein müssen, dass das Band das senkrecht angeordnete Querteil ausreichend sicher unterstützen kann. Die Wandstärke des Bandes muss so klein sein, dass eine gute Biegeverformung in Richtung auf das Gebäude eintreten kann. Zweckmässigerweise wird dieses Band auch an der Innenseite des unteren Querteils befestigt. Zudem erstreckt sich vom unteren Rand des unteren Querteils zum Gebäude hin eine etwa waagerechte Plane, die den Raum zwischen dem unteren Rand des Querteils und dem Gebäude überbrückt.aber praktisch keine Trägerfunktion in Bezug auf das untere Querteil erfüllen kann.

Bei einer so ausgebildeten Dichtung kann sich das untere Querteil in seinem oberen Bereich weitgehend der Aussenkontur eines Fahrzeuges anpassen. Zudem ist infolge der Biegsamkeit des vorgenannten Bandes sichergestellt, dass das Querteil in seiner Gesamtheit in Richtung auf das Gebäude verformbar ist.

Weitere Einzelheiten der Erfindung werden anhand der Zeichnung erläutert, in der ein Ausführungsbeispiel der Erfindung dargegstellt ist. Es zeigen:
Fig. 1 die linke Hälfte einer verformbaren Dichtung des Spaltes zwischen dem Rand einer Gebäudeöffnung und dem Heck eines an diese herangefahrenen Fahrzeuges in der Ansicht,
Fig. 2 einen Schnitt nach der Linie II - II von Fig. 1,
Fig. 3 einen Teilschnitt nach der Linie III - III von Fig. 2 und
Fig. 4 einen Teilschnitt nach der Linie IV - IV von Fig. 1.

Das Gebäude mit der Wandung 1 hat eine Gebäudeöffnung 2, die meist durch ein Sektionaltor od. dgl. verschliessbar ist.Um einen Ladebetrieb ohne Witterungseinflüsse od. dgl. durchführen zu können, ist der Spalt zwisch dem Rand der Gebäudeöffnung und dem Heck eines andockenden Fahrzeuges abzudichten. Dies geschieht mit der Dichtung gemäss Zeichnung.

Im Abstand von der Wandung 1 ist eine senkrechte, verformbare Schürze vorgesehen, die aus einem oben gelegenen Querteil und zwei zu beiden Seiten der Gebäudeöffnung 2 befindlichen Sreifen 4 sowie aus einem noch weiter unten erwähnten Konstruktionsteil besteht. Das vor den Streifen 4 befindliche Querteil 3 ist gardinenartig aufgehängt und oben mit einer biegesteifen Traverse 5 verbunden, die von schräg nach oben verlaufenden Streben 6 getragen ist.An der Traverse 5 ist ein Metallprofil 7 befestigt, das der Befestigung des Querteils 3 und einer Dachplane 8 dient, die mit ihrem hinteren Ende an der Wandung 1 befestigt ist.Die beiden Streben 6 sind mit der Traverse 5 starr verbunden, jedoch am unteren Ende an einem Gleitstein 8 verschwenkbar und daher im Sinne des Pfeiles 9 bewegbar. Zur Führung des Gleitsteines 8 dienen senkrechte Führungen 1o.Daher kann das Querteil 3 mit der Traverse 5 und der Dachplane 8 Hubbewegungen ausführen z.B. bei hohen Fahrzeugen oder beim Absetzen von Sattelaufliegern. An beiden Enden der Dachplane 8 befinden sich frei herabhängende Lappen als Überhänge 11.

Zur seitlichen Abdichtung sind Seitenteile 12 vorgesehen. Sie sind mit dem hintern Rand an der Wandung 1 und mit ihrem vorderen Rand an einem senkrechten Kantenprofil 13 befestigt, das die Streifen 4 trägt.

Alle Teile der Schürze und die sie mit dem Gebäude verbindenden Teile der Dichtung bestehen aus einem lappigen, folienartigen Werkstoff bzw. Material, das sich der Kontur des Fahrzeuges anpassen kann, jedoch reissfest sein muss.

Die beiden Streifen 4, das Kantenprofil 13 und die Seitenteile 12 enden mit Abstand unterhalb der Dachplane 8 und der Traverse 5. Der freie Raum wird dabei nach vorne vom Querteil 3 und den beiden Überhängen 11 abgedeckt.

Die Seitenteile 12 werden durch im Bereich der Kantenprofile 13 bei 14 angreifende Seile 15 getragen, die durch die Traverse 5 hindurchgeführt, dort durch Rollen 16 umgelenkt und schliesslich über Zugfedern 17 in Verbindung stehen. Im Bereich des unteren Endes des Kantenprofils 13 ist mit diesem das untere Ende einer eng gewickelten Schraubenfeder 18 verbunden. Sie ist ihrerseits oben an der Wandung 1 befestigt.

Durch das Seil 15 ergibt sich eine Haltekraft im Sinne des Pfeiles 19. Damit entsteht eine Zugspannung 2o in den Seitenteilen 12. Dies bedeuetet, dass in den Seitenteilen 12 eine sie straffende Kraft entsteht.Die Schraubenfeder 18 kann ihrerseits einer Verformung der Dichtung folgen, kehrt aber nach dem Abdocken des Fahrzeuges wieder in ihre ursprüngliche Gestalt zurück.

Es ist ferner ein im unteren Randbereich der Gebäudeöffnung 2 befindliches, mit zur Schürze gehörendes Querteil 22 vorgesehen, das jedoch im Gegensatz zu dem oberen Querteil 3 nicht vor, sondern hinter den Streifen 4 angeordnet ist, sich aber auch von einem zum anderen Streifen 4,und zwar auch hinter diese Streifen 4 erstreckt. Hinter den Streifen 4 am oberen Rand greift an beiden Enden des Querteils 22 ein elastisches Zug-oder Aufhängeseil 25 an, das oben an der Traverse 5 aufgehängt und befestigt ist.Wichtig ist, dass das an sich lappige Querteil 22 am unteren Rand durch ein hochkant stehendes Band aus Stahl, vorzugsweise aus Federstahl verstärkt ist, das mit 23 bezeichnet ist und innen am Querteil 22 anliegt und flächig mit dem Querteil 22 fest verbunden ist.Die Höhe dieses Bandes beträgt etwa 1/6 bis ein 1/4 der Gesamthöhe des Querteils 22 und hat eine geringe Wandstärke z.B. von etwa o.5 - 2 mm, wobei es sich versteht, dass diese Werte an die Höhe und Breite bzw. Länge des Querteils 22 anzupassen sind.

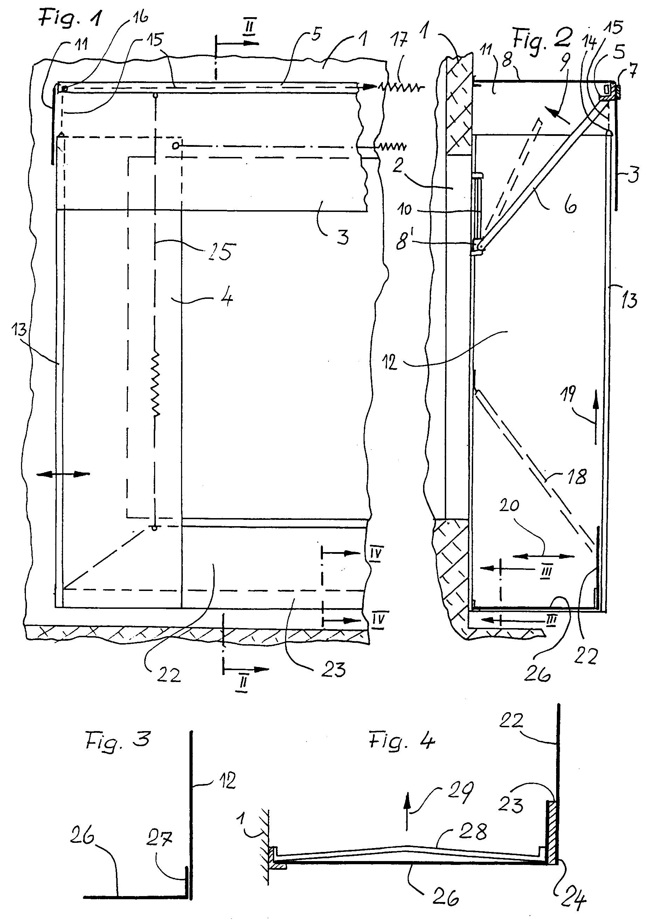

Vom unteren Rand 24 erstreckt sich eine der Dachplane 8 entsprechende Bodenplane 26 nach hinten und ist amGebäude befestigt; diese Plane und auch die Dachplane 8 der Dichtung sind praktisch waagerecht angeordnet.Vgl. Fig. 2 der Zeichnung.

Wird das Querteil 22 beim Andocken eines Fahrzeuges in Richtung auf das Gebäude verformt, so kann sich das Querteil 22 der Fahrzeuggestalt anpassen, aber auch nachgeben aufgrund des Bandes 23, das somit vorwiegend eine Stabilisierungsfunktion zum Tragen und Halten des Querteils 22 erfüllt Unterstützt wird das Band 22 bezüglich seiner Haltefunktion durch das Aufhängeseil 25.

Wie aus Fig. 3 erkennbar ist, sind die seitlich aussen gelegenen Ränder 27 des Bodenteils 26 mit den Seitenteilen 12 z.B. durch Kleben fest verbunden. Zudem sind dem Querteil 22 eine mittig angeordnete Rückholfeder 28 evtl weitere Federn dieser Art zugeordnet, die sich mit ihrem einen Ende innen am Band 23 und mit ihrem anderen Ende am Gebäude abstützen.Diese Federn sind im noch nicht verformten Zustand geringfügig nach oben durchgebogen, um mit Sicherheit ein Auswölben nach oben im Sinne des Pfeiles 29 zu erreichen, wenn das Querteil 22 beaufschlagt wird. Auch diese Rückholfedern 28 haben nur eine unterstützende Wirkung, um beim Abziehen des Fahrzeuges zu erreichen, dass das Querteil 22 nach dem Abziehen des Fahrzeuges wieder in seine ursprüngliche Gestalt gemäss Zeichnung zurückkehrt.

Das Band 23 kann ggfs. auch durch ein entsprechend steif eingestelltes, hartes Band aus Kunststoff ersetzt werden, natürlich mit der Massgabe, dass es die schon beschriebene tragende Funktion ausüben kann. Bei allen Ausführungen darf sich das Band jedoch nicht in den oberen Bereich des Quuerteils 22 erstrecken, weil es dort die Verformbarkeit des Querteils 22 nachteilig beeinflussen könnte. Ggfs. kann auch die Blattfeder 28 durch eine sich zur Seite hin verformende Rückholfeder ersetzt werden.

## Patentansprüche

1. Verformbare Dichtung des Spaltes zwischen dem Rand einer Gebäudeöffnung (2) und dem Heck eines an diese herangefahrenen Fahrzeuges mit einer verformbaren, in Richtung auf das Gebäude hin nachgiebigen Schürze aus einem oben gelegenen Querteil (3), zwei zu beiden Seiten der Gebäudeöffnung angeordneten, senkrechten Streifen (4) und einem unteren Querteil (22) im Bereich des unteren Randes der Gebäudeöffnung (2), wobei sich die beiden Querteile (3, 22) von einem zum anderen Streifen (4) erstrecken, das obere Querteil (3) an einer Traverse (5) gardinenartig aufgehängt ist und am unteren Rand des unteren Querteils (22) ein Tragkörper angreift, dadurch gekennzeichnet, dass der Tragkörper ein hochkant stehendes ,mit dem unteren Querteil (22) verbundenes, in Richtung auf das Gebäude biegsames Band (23) ist, dessen Höhenerstreckung mehrfach grösser ist als dessen Wandstärke.

2. Dichtung nach Anspruch 1, dadurch gekennzeichnet, dass das Band (23) aus Stahl. insb. Federstahl, besteht.

3. Dichtung nach Anspruch 1, dadurch gekennzeichnet, dass das Band (23) aus einem Kunststoff besteht, dessen physikalische Werte denjenigen von Stahl entsprechen.

4. Dichtung nach Anspruch 1, dadurch gekennzeichnet, dass am oberen Rand des unteren Querteils (22) - vorzugsweise an jedem Ende - zumindest ein elastisch nachgiebiges Tragseil (25) angreift, das mit seinem oberen Ende mit der das obere Querteil (3) tragenden Traverse (5) verbunden ist

5. Dichtung nach Anspruch 1, dadurch gekennzeichnet, dass die Höhe des Bandes (23) in etwa 1/6 bis 1/4 der Gesamthöhe des untern Querteils (22) entspricht.

6. Dichtung nach Anspruch 1, dadurch gekennzeichnet, dass die Wandstärke des Bandes (23) in etwa o.5 - 2 mm beträgt.

7. Dichtung nach Anspruch 1, dadurch gekennzeicnhnet, dass die Breite des Bandes (23) in etwa 5 - 15 cm beträgt

8. Dichtung nach Anspruch 1, dadurch gekennzeichnet, dass sich vom untern Rand des unteren Querteils (22) zum Gebäude hin eine lappige, biegsame Bodenplane (26) erstreckt, die hinten mit dem Gebäude verbunden ist.

9. Dichtung nnach Anspruch 8, dadurch gekennzeichnet, dass die Bodenplane (26) an ihren seitlich aussen gelegenen Rändern dichtend mit den Seitenteilen (12) verbunden sind, die die Streifen (4) mit dem Gebäude verbinden und die Dichtung seitlich aussen abschliessen.

10. Dichtung nach Anspruch 1, dadurch gekennzeichnet, dass sich von dem untern Rand des unteren Querteils (22) bzw. seinem Band (23) aus nach hinten zum Gebäude hin zumindest eine als Blattfeder (28) ausgebildete Rückholfeder erstreckt, die sich am Gebäude abstützt und sich beim Eindrücken des unteren Querteils (22) zur Seite hin oder nach oben hin auswölbt.

11. Dichtung nach Anspruch 1o, dadurch gekennzeichnet, dass die Blattfeder (28) im nicht verformten Zustand geringfügig nach oben durchgewölbt bzw. durchgebogen ist.

12. Dichtung nach Anspruch 1, dadurch gekennzeichnet, dass das Band (23) flächig mit dem Querteil (22) verbunden ist z.B. durch Kleben, Nieten oder dgl..

13. Dichtung nach Anspruch 1, dadurch gekennzeichnet, dass das Band (23) an der Innenseite des Querteils (22) anliegt.

## Claims

1. Deformable seal for sealing the gap between the edge of a building opening (2) and the rear of a vehicle which has been driven up to said opening, having a deformable apron, which is resilient in the direction towards the building and is formed from an upper transverse member (3), two vertical strips (4), which are disposed on both sides of the building opening, and a lower transverse member (22) in the region of the lower edge of the building opening (2), the two transverse members (3, 22) extending from one strip to the other strip (4), the upper transverse member (3) being suspended from a cross-piece member (5) in a curtain-like manner, and a supporting body co-operating with the lower edge of the lower transverse member (22), characterised in that the supporting body is a belt (23), which stands on its edge, is connected to the lower transverse member (22) and is flexible in the direction towards the building, the vertical dimension of said belt being many times greater than its wall thickness.

2. Seal according to claim 1, characterised in that the belt (23) is formed from steel, more especially spring steel.

3. Seal according to claim 1, characterised in that the belt (23) is formed from a plastics material, the physical values of which correspond to those of steel.

4. Seal according to claim 1, characterised in that at least one elastically resilient supporting cable (25) cooperates with the upper edge of the lower transverse member (22) - preferably at each end - and is connected by its upper end to the cross-piece member (5) supporting the upper transverse member (3).

5. Seal according to claim 1, characterised in that the height of the belt (23) corresponds approximately to between 1/6 and 1/4 of the overall height of the lower transverse member (22).

6. Seal according to claim 1, characterised in that the wall thickness of the belt (23) is approximately 0.5 - 2 mm.

7. Seal according to claim 1, characterised in that the width of the belt (23) is approximately 5 - 15 cm.

8. Seal according to claim 1, characterised in that a soft, flexible bottom cover (26) extends from the lower edge of the lower transverse member (22) to the building, and its rear side is connected to the building.

9. Seal according to claim 8, characterised in that the bottom cover (26) is sealingly connected at its laterally external edges to the lateral portions (12), which connect the strips (4) to the building amd terminate the seal laterally externally.

10. Seal according to claim 1, characterised in that at least one return spring, which is configured as plate spring (28), extends from the lower edge of the lower transverse member (22) or respectively from its belt (23) rearwardly towards the building, said return spring being supported on the building and arching towards the side or upwardly when the lower transverse member (22) is pressed inwardly.

11. Seal according to claim 10, characterised in that the plate spring (28) is curved or bent slightly upwardly when it is in its non-deformed state.

12. Seal according to claim 1, characterised in that the belt (23) is connected to the transverse member (22) in a surface-to-surface manner, e.g. by gluing, riveting or the like.

13. Seal according to claim 1, characterised in that the belt (23) abuts against the inside of the transverse member (22).

## Revendications

1. Dispositif déformable pour rendre étanche l'intervalle compris entre le bord d'une baie (2) de bâtiment et l'arrière d'un véhicule automobile qui s'en approche, comportant une jupe déformable, pouvant céder suivant la direction du bâtiment et constituée d'une partie (3) transversale supérieure, de deux bandes (4) verticales disposées des deux côtés de la baie et d'une partie (22) transversale inférieure dans la zone du bord inférieur de la baie (2), les deux parties (3,22) transversales s'étendant de l'une des bandes (4) à l'autre, la partie (3) transversale supérieure étant suspendue à la manière d'un rideau à une traverse (5), un support étant appliqué au bord inférieur de la partie (22) transversale inférieure, caractérisé en ce que le support est une bande posée sur chant, reliée à la partie (22) transversale inférieure souple suivant la direction du bâtiment et dont la hauteur est plusieurs fois plus grande que son épaisseur de paroi.

2. Dispositif pour rendre étanche suivant la revendication 1, caractérisé en ce que la bande (23) est en acier, notamment en acier pour ressort.

3. Dispositif pour rendre étanche suivant la revendication 1 caractérisé en ce que la bande (23) est en matière plastique, dont les propriétés physiques correspondent à celles de l'acier.

4. Dispositif pour rendre étanche suivant la revendication 1 caractérisé en ce qu'au moins un câble (25) de support, dont l'extrémité supérieure est reliée à la traverse (6) portant la partie (3) transversale supérieure et qui cède élastiquement, attaque le bord supérieur de la partie (22) transversale inférieure - de préférence à chaque extrémité - .

5. Dispositif pour rendre étanche suivant la revendication 1 caractérisé en ce que la hauteur de la bande (23) représente environ de 1/6 à 1/4 de la hauteur totale de la partie (22) transversale inférieure.

6. Dispositif pour rendre étanche suivant la revendication 1 caractérisé en ce que l'épaisseur de paroi de la bande (23) est d'environ 0,5 à 2mm.

7. Dispositif pour rendre étanche suivant la revendication 1 caractérisé en ce que la largeur de la bande (23) est d'environ 5 à 15cm.

8. Dispositif pour rendre étanche suivant la revendication 1 caractérisé en ce qu'une bâche (26) de fond souple et flasque s'étend du bord inférieur de la partie (22) transversale inférieure au bâtiment, en étant relié par l'arrière au bâtiment.

9. Dispositif pour rendre étanche suivant la revendication 8 caractérisé en ce que les bâches (26) de fond sont reliés de manière étanche par leurs bords situés à l'extérieur latéralement, aux parties (22) latérales, qui relient les bandes (4) au bâtiment et ferment le dispositif d'étanchéité à l'extérieur latéralement.

10. Dispositif pour rendre étanche suivant la revendication 1 caractérisé en ce qu'au moins un ressort de rappel, en forme de ressort (28) à lame, qui s'appuie sur le bâtiment et qui, sous la pression de la partie (22) transversale inférieure, se cintre vers le côté ou vers le haut, s'étend du bord inférieur de la partie (22) transversale inférieure ou de sa bande (23), vers l'arrière, jusqu'au bâtiment.

11. Dispositif pour rendre étanche suivant la revendication 10, caractérisé en ce que le ressort (28) à lames, est, lorsqu'il n'est pas déformé, cintré ou courbé légèrement vers le haut.

12. Dispositif pour rendre étanche suivant la revendication 1 caractérisé en ce que la bande (23) est relié à plat à la pièce (22) d'extrémité, par exemple par collage, rivetage ou analogue.

13. Dispositif pour rendre étanche suivant la revendication 1 caractérisé en ce que la bande (23) s'applique à la face intérieure de la partie (22) transversale.
